# EUROPEAN PATENT SPECIFICATION

(11) **EP 2 829 076 B1**
(45) Date of publication and mention of the grant of the patent: **14.12.2016**
(21) Application number: 12712043.4
(22) Date of filing: 23.03.2012
(51) Int. Cl.: H04N 21/43, H04N 21/44, H04N 21/462

(54) **METHOD OF BUFFER MANAGEMENT FOR SYNCHRONIZATION OF CORRELATED MEDIA PRESENTATIONS**
VERFAHREN ZUR PUFFERVERWALTUNG ZUR SYNCHRONISIERUNG VON KORRELIERTEN MEDIENPRÄSENTATIONEN
PROCÉDÉ DE GESTION DE MÉMOIRE TAMPON POUR UNE SYNCHRONISATION DE PRÉSENTATIONS MULTIMÉDIAS CORRÉLÉES

(43) Date of publication of application: 28.01.2015
(73) Proprietor: Thomson Licensing, 92130 Issy-les-Moulineaux (FR)
(72) Inventor: LI, Jun, Cranbury, New Jersey 08512 (US); MA, Xiao Jun, Beijing 100039 (CN); CHEN, Jian Feng, Beijing 100096 (CN)
(74) Representative: Hofstetter, Schurack & Partner
(86) International application number: PCT/US2012/030307
(87) International publication number: WO 2013/141874

(56) References cited:
- EP-A1- 1 860 866
- US-A1- 2006 161 835
- US-B1- 6 339 675
- FERNANDO BORONAT SEGUÃ Â ET AL: "An RTP/RTCP based approach for multimedia group and inter-stream synchronization", MULTIMEDIA TOOLS AND APPLICATIONS, KLUWER ACADEMIC PUBLISHERS, BO, vol. 40, no. 2, 25 June 2008 (2008-06-25), pages 285-319, XP019647284, ISSN: 1573-7721, DOI: 10.1007/S11042-008-0208-1
- FERNANDO BORONAT ET AL: "Master Selection Policies for Inter-destination Multimedia Synchronization in Distributed Applications", MODELING, ANALYSIS&SIMULATION OF COMPUTER AND TELECOMMUNICATION SYSTEMS (MASCOTS), 2011 IEEE 19TH INTERNATIONAL SYMPOSIUM ON, IEEE, 25 July 2011 (2011-07-25), pages 269-277, XP032048415, DOI: 10.1109/MASCOTS.2011.43 ISBN: 978-1-4577-0468-0

## Description

### BACKGROUND OF THE INVENTION

The present invention generally relates to synchronization of correlated media presentations among two or more media devices. Each device makes a determination as to whether inter-presentation synchronization may be outside of a predetermined tolerance. If so, the device making the determination communicates its buffer and playback status to the other device. Based upon comparison of the buffer and playback status of the local presentation with the buffer and playback status of the presentation at the other device, each device makes a determination as to whether to pause playback, so as to allow the other device to catch up, advance playback, so as to catch up with the other device, or take no action, allowing the other device to take action to correct the synchronization issue.

This section is intended to introduce the reader to various aspects of art, which may be related to various aspects of the present invention that are described below. This discussion is believed to be helpful in providing the reader with background information to facilitate a better understanding of the various aspects of the present invention. Accordingly, it should be understood that these statements are to be read in this light, and not as admissions of prior art.

Television viewing has traditionally been a passive single-screen activity. The emergence of the Internet and mobile computing devices, however, has opened possibilities for richer, interactive, multi-screen experiences. For instance, a secondary media presentation comprising content that is coordinated with a primary program displayed on a television may be provided over the Internet to a mobile computing device. The secondary presentation may provide supplemental information about the primary presentation, provide different views of the same event, or provide opportunities for interaction. The multiple presentations, however, will generally require synchronization in order for the user to have the intended experience.

In traditional synchronization methods, a secondary view of a multiple-view presentation follows the timeline of a primary view, such as in the case of lip-sync of an audio-video presentation, and tolerances must be very tight. Since the source of both portions of the presentation is generally the same, however, synchronization can generally be achieved with a static timing adjustment.

In the case of correlated presentations across multiple devices, each presentation is potentially supplied from a different source, and the user may have independent control of playback at each device. Network congestion at one source, or a pause or fast-forward command at one presentation device, for instance, could cause a loss of synchronization.

One method of maintaining synchronization would be for each device to communicate frequently with a centralized server, which could respond with instructions to the devices that would reestablish synchronization. Coordinating playback position via a server produces additional unwanted network traffic, which would be especially problematic when many clients are monitoring the same programs. Network delays may also limit the accuracy of such methods. The invention described herein addresses these and/or other problems.

In this context the document FERNANDO BORONAT SEGUÃ Â ET AL: "An RTP/RTCP based approach for multimedia group and inter-stream synchronization", MULTIMEDIA TOOLS AND APPLICATIONS, KLUWER ACADEMIC PUBLISHERS, BO, vol. 40, no. 2, 25 June 2008 (2008-06-25), pages 285 - 319, XP019647284, ISSN: 1573-7721, DOI: 10.1007/S11042-008-0208-1 discloses two master/slave schemes: one for group synchronization and another for inter-stream synchronization.

### SUMMARY OF THE INVENTION

In order to solve the problems described above, we disclose synchronization of correlated media presentations among two or more media devices. Each device makes a determination as to whether inter-presentation synchronization may be outside of a predetermined tolerance. If so, the device making the determination communicates its buffer and playback status to the other device. Based upon comparison of the buffer and playback status of the local presentation with the buffer and playback status of the presentation at the other device, each device makes a determination as to whether to pause playback, so as to allow the other device to catch up, advance playback, so as to catch up with the other device, or take no action, allowing the other device to take action to correct the synchronization issue. This and other aspects of the invention will be described in detail with reference to the accompanying Drawings.

### BRIEF DESCRIPTION OF THE DRAWINGS

The above-mentioned and other features and advantages of this invention, and the manner of attaining them, will become more apparent, and the invention will be better understood, by reference to the following description of embodiments of the invention taken in conjunction with the accompanying drawings, wherein:
FIG. 1 is diagram of a media presentation environment;
FIG. 2A is a timeline view of the status of the playback of two media presentations;
FIG. 2B is a timeline view of the status of the playback of two media presentations, wherein the presentations are out of synchronization;
FIG. 3 is a flow chart of a method of synchronization of media presentations;
FIG. 4 is a flow chart of an alternative method of synchronization of media presentations.

The exemplifications set out herein illustrate preferred embodiments of the invention, and such exemplifications are not to be construed as limiting the scope of the invention in any manner.

### DESCRIPTION OF THE PREFERRED EMBODIMENTS

As described herein, the present invention provides synchronization of correlated media presentations among two or more media devices. Each device makes a determination as to whether inter-presentation synchronization may be outside of a predetermined tolerance. If so, the device making the determination communicates its buffer and playback status to the other device. Based upon comparison of the buffer and playback status of the local presentation with the buffer and playback status of the presentation at the other device, each device makes a determination as to whether to pause playback, so as to allow the other device to catch up, advance playback, so as to catch up with the other device, or take no action, allowing the other device to take action to correct the synchronization issue.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

The present invention may be implemented in any combination of television set top boxes, televisions, computing devices, or other electronic devices.

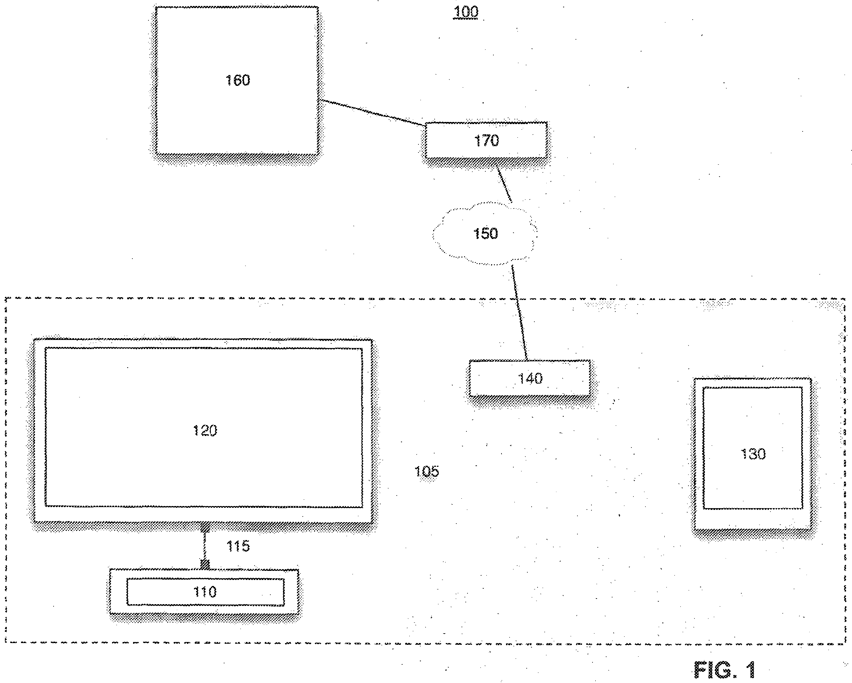

FIG. 1 is a diagram of a media presentation environment 100. Set top box 110 provides audio and video to television 120 via cable 115. Modem 140 provides Internet connectivity and local area networking functionality to the home environment 105. Set top box 110 and mobile computing device 130 access media presentations from server 160 via router 170 and the Internet 150.

The set top box 110 and mobile computing device 130 function as a system to coordinate presentation of the first media presentation at the set top box 110 and a second media presentation at the mobile computing device 130. Synchronization is achieved locally through buffer management at the media presentation devices 110 and 130, rather than via interaction with the server.

In this example, there are two correlated media presentations rendered on two devices connected through a local area network. The number of media presentations and types of media devices may vary within the scope of the invention. In a preferred embodiment, the second media presentation comprises information related to the first media presentation. The first and second media presentations may be provided from the same or different servers and via the same or different network connections. One or both media presentations may comprise video or audio streams, in addition to other data. A video stream may comprise, for example, data encoded in MPEG, Microsoft ASF or WMV, Apple QuickTime or MOV, or RealNetworks RM or RMVB formats. One of the media devices, rather than a server, may serve as the source of one or both presentations.

There are various causes for the loss of synchronization. In some cases, the separate media presentations may come from different servers over different networks, and may face different network congestion conditions that affect delivery of the content. User interaction, such as pausing or fast-forwarding on either device, may also cause the playback positions of the two presentations to diverge.

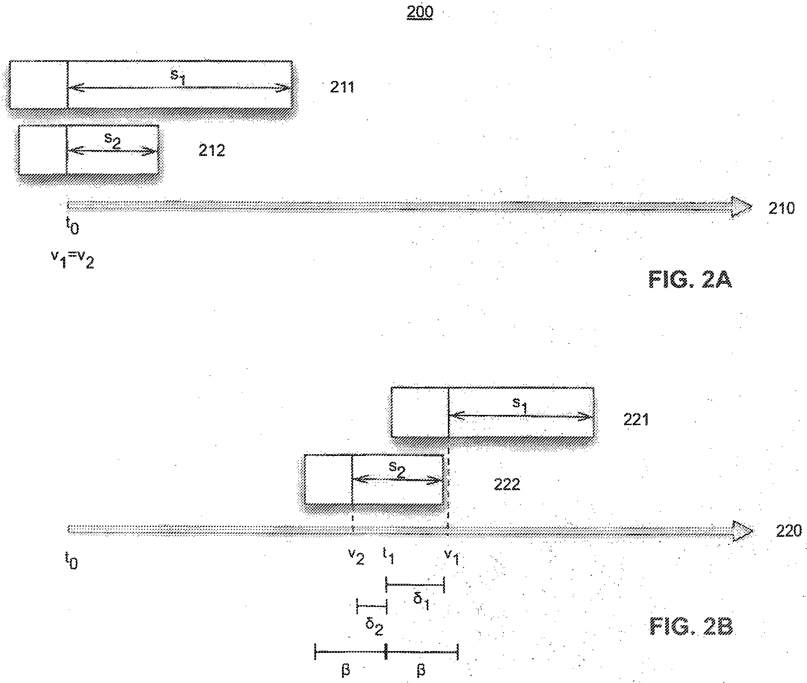

FIG. 2A is a timeline view 210 of the status of the playback of two media presentations at a time t = t₀. In this example, at time t = t₀, the two media presentations are synchronized. The playback position of the first presentation at the first media device, designated v₁, is at the point corresponding to the playback position of the second presentation at the second device, designated v₂. The first media device has a segment 211 of the first media presentation available in a buffer, with the portion s₁ representing content yet to be displayed. The second media device has a segment 212 of the second media presentation available in a buffer, with the portion s₂ representing content yet to be displayed. In this example, the buffer for the first media presentation at the first media device is more full than the buffer for the second media presentation at the second media device.

Over time, either due to different playback speeds, or perhaps pausing or fast-forwarding activity on one device or the other, the two media presentations may become out of synchronization. FIG. 2B is a timeline view of one example of the media presentations being out of synchronization. At the time t = t₁, the first media device is presenting the first media presentation at playback position v₁. The difference between the elapsed real time and the elapsed program time is δ₁ = (v₁ - v₀) - (t₁ - t₀). The amount of time v₁ - v₀ associated with the portion of the first media presentation under consideration may be determined based upon time data associated with the beginning and end of the portion of the first presentation.

When δ₁ > 0, the media presentation has been playing, on average, faster than real time. When δ₁ < 0, the media presentation has been playing, on average, slower than real time. In this example, the first media presentation is ahead of the position expected from strict real time playback, and δ₁ > 0. The second media presentation is behind the position expected from strict real time playback, and δ₂ < 0.

A synchronization tolerance of β seconds may be set for the presentations. If two media presentation are out of synchronization by at least β seconds, it must be the case that either |δ₁| > β/2 or |δ₂| > β/2, or both. Thus, a local determination at a presentation device of δ, and comparison to βμ can be used as one indicator of a potential need for synchronization action. In the example of FIG. 2B, δ₁ > β/2. Thus, a determination can be made at the first presentation device that there may have been a loss of synchronization, and that action may be required.

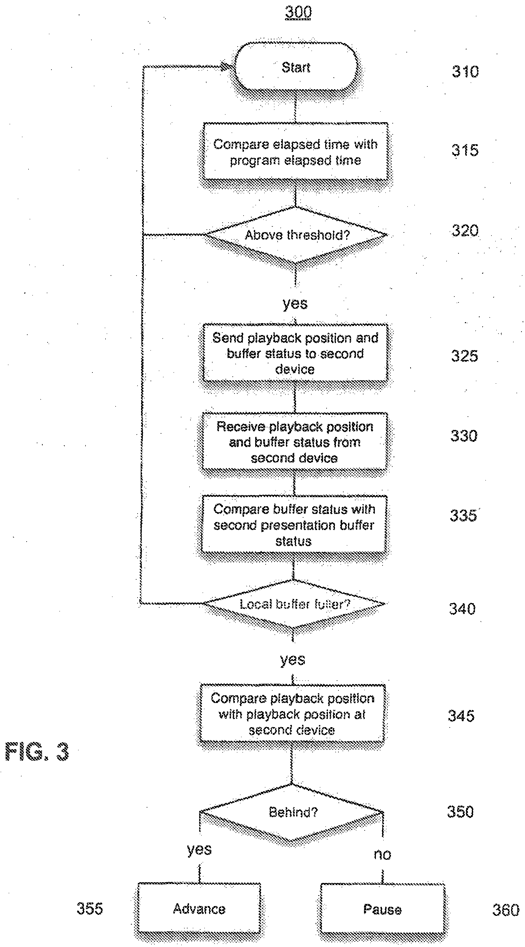

FIG. 3 is a flow chart of a method 300 followed by the devices involved in the synchronization process. In some embodiments, two or more devices may be following the same method.

At step 310, suppose at time t = to, the two media presentations are synchronized, and v₁ = v₂, as shown in FIG. 2A. The first device compares the time elapsed during presentation of a portion of the first media presentation with an amount of time associated with the portion of the first media presentation at step 315, determining δ₁, for instance.

If the difference between the time elapsed during presentation of the portion of the first media presentation and the amount of time associated with the portion of the first media presentation is found to exceed a threshold, for instance, |δ₁| > β/2, at step 320, the first device sends its playback and buffer status to the second device at step 325. The communication of information including playback position may be performed over a local area network, which may be wired or wireless, or via a combination of networks, potentially including the Internet.

The playback position and buffer status of the second device are received by the first media device at step 330. The indication of the playback position and buffer status of the second media presentation from the second device may be received in response to the first device sending an indication of the playback position and buffer status of the first media presentation to the second device, or as a result of a determination at the second device that its own deviation is also above the threshold.

At step 335, the first device compares the buffer status s₁ of the first media presentation with a buffer status s₂ of the second media presentation at the second device. The determination of which buffer is fuller may be made based upon the amount of time associated with the portion of the media presentation stored in each buffer or upon another measure of the data, such as size. In the presently described embodiment, if the local buffer is determined to be fuller at step 340, that is, s₁ > s₂, the first device takes responsibility for synchronizing the presentations.

The playback positions v₁ and v₂ of the two devices are compared at step 345. If the playback position of the first media presentation is found to be behind the playback position of the second media presentation on the second device at step 350, the first device advances playback of the first media presentation to catch up at step 355. That is, if v₁ < v₂, the first media presentation is brought up to the playback position of the second media presentation by advancing by v₂ - v₁ seconds. The advancing of the media presentation may comprise discarding or skipping presentation of contiguous or discontiguous video frames, or advancing to an appropriate portion of other types of content.

If the playback position of the first media presentation is found to be ahead of the playback position of the second media presentation on the second device at step 350, the first device uses one or more pauses to allow the second media presentation to catch up at step 360. That is, if v₁ > v₂, the first device slows playback of the first media presentation by pausing for v₁ - v₂ seconds. The pausing of a presentation may comprise multiple pauses of a duration less than the time difference between the playback positions of the first and second media presentations so as to avoid a single longer pause that may be more objectionable to the viewer.

In cases where the local device does not adjust playback to achieve synchronization, the other device, executing the same or a similar algorithm, may. The method may be performed on a periodic basis, or may also be triggered by indications of network issues or user interaction.

In the embodiment described above, the synchronization task is assigned to the device with the fuller buffer. However, it could be advantageous if, in the case where the device with the less-full buffer is ahead of the other in playback, to have that device pause to reestablish acceptable synchronization. This would have the advantage of increasing the buffer fullness of the device.

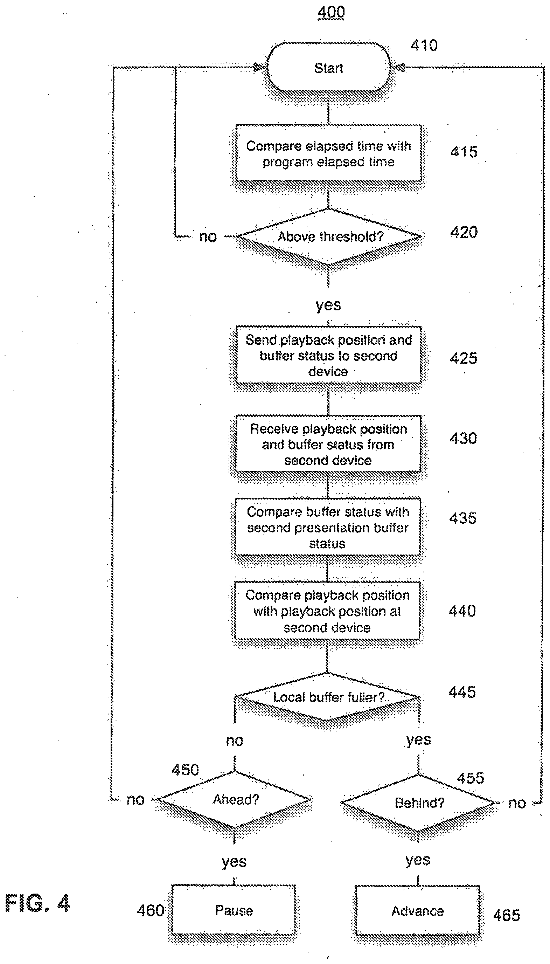

FIG. 4 is a flow chart of such an alternative method 400. At step 410, suppose at time t = t₀, the two media presentations are synchronized, and v₁ = v₂, as shown in FIG. 2A. The first device compares the time elapsed during presentation of a portion of the first media presentation with an amount of time associated with the portion of the first media presentation at step 415, determining δ₁, for instance.

If the difference between the time elapsed during presentation of the portion of the first media presentation and the amount of time associated with the portion of the first media presentation is found to exceed a threshold, for instance, |δ₁| > β/2, at step 420, the first device sends its playback and buffer status to the second device at step 425. The communication of information including playback position may be performed over a local area network, which may be wired or wireless, or via a combination of networks, potentially including the Internet.

The playback position and buffer status of the second device are received by the first media device at step 430. The indication of the playback position and buffer status of the second media presentation from the second device may be received in response to the first device sending an indication of the playback position and buffer status of the first media presentation to the second device, or as a result of a determination at the second device that its own deviation is also above threshold.

At step 435, the first device compares the buffer status s₁ of the first media presentation with a buffer status s₂ of the second media presentation at the second device. The determination of which buffer is fuller may be made based upon the amount of time associated with the portion of the media presentation stored in each buffer or upon another measure of the data such as size.

In the presently described embodiment, both the relative buffer fullness and playback position impact whether action will be taken at the device of interest. If the local buffer is determined to be less full at step 445, and the local playback position is determined to be ahead at step 450, the first device uses one or more pauses to allow the second media presentation to catch up at step 460. That is, if s₁ < s₂ and v₁ > v₂, the first device slows playback of the first media presentation by pausing for v₁ - v₂ seconds. The pausing of a presentation may comprise multiple pauses of smaller duration than the time difference between the playback positions of the first and second media presentations so as to avoid a single longer pause that may be more objectionable to the viewer.

If the local buffer is determined to be more full at step 445, and the playback position of the first media presentation is found to be behind the playback position of the second media presentation on the second device at step 455, the first device discards a portion of the first media presentation to catch up at step 465. That is, if s₁ > s₂ and v₁ < v₂, the first media presentation is brought up to the playback position of the second media presentation by advancing the presentation by v₂ - v₁ seconds. The advancing of the media presentation may comprise skipping presentation of contiguous or discontiguous video frames, or advancing to an appropriate portion of other types of content.

In cases where the local device does not adjust playback to achieve synchronization, the other device, executing the same or a similar algorithm, may. The method may be performed on a periodic basis, or may also be triggered by indications of network issues or user interaction.

While the present invention has been described in terms of a specific embodiment, it will be appreciated that modifications may be made. For example, the described methods may be combined with other methods addressing other issues. If a buffer is too full, for instance, a rate control mechanism may be engaged to slow down the transmission rate. The algorithm may also be extended to systems with more than two media devices. For instance, each of the media devices with larger buffer fullness could set their timelines in accordance with the media device with the lowest buffer fullness.

## Claims

1. A method for coordinating presentation of a first media presentation at a first device (120, 130) and a second media presentation at a second device (130, 120) comprising the steps of:
adjusting playback of said first media presentation on said first device wherein said adjusting playback comprises the steps of:
comparing the playback position (v₁) of the first media presentation at the first device with the playback position (v₂) of the second media presentation at the second device; and
responsive to a determination that the playback position (v₁) of the first device is behind the playback position (v₂) of the second device, advancing playback of the first media presentation based upon the time difference between the playback position of the first media presentation at the first device and the playback position of the second media presentation at the second device, or,
responsive to a determination that the playback position (v₁) of the first device is ahead of the playback position (v₂) of the second device, pausing playback for a time selected based upon the difference between the playback position of the first media presentation at the first device and the playback position of the second media presentation at the second device,
sending an indication of the playback position (v₁) and buffer status (s₁) of the first media presentation at the first device to the second device;
receiving at the first device an indication of the playback position (v₂) and buffer status (s₂) of the second media presentation from the second device;
comparing the time (t₁-t₀) elapsed during presentation of a portion of the first media presentation with an amount of time (v₁-v₀) associated with the portion of the first media presentation;
responsive to a determination that the difference (δ₁) between the time (t₁-t₀) elapsed during presentation of the portion of the first media presentation and the amount of time (v₁-v₀) associated with the portion of the first media presentation exceeds a threshold, performing the steps of:
comparing the buffer status (s₁) of the first media presentation at the first device with a buffer status (s₂) of the second media presentation at the second device; and
responsive to a determination that the buffer (s₁) for the first media presentation on the first device is fuller than the buffer (s₂) for the second media presentation on the second device, adjusting playback of the first media presentation on the first device.

2. The method of claim 1 wherein said sending is performed responsive to the determination that the difference between the elapsed time (t₁-t₀) and the time (v₁-v₀) associated with the presented portion of the first media presentation exceeds a threshold.

3. The method of claim 1 wherein advancing playback of the data stream comprises skipping presentation of video frames.

4. The method of claim 1 wherein said pausing comprises multiple pauses of a duration less than the time difference between the playback position (v₁) of the first media presentation at the first device and the playback position (v₂) of the second media presentation at the second device.

5. The method of claim 1 wherein the amount of time associated with the portion (v₁) of the first media presentation is determined based upon time data associated with the beginning and end of the portion of the first presentation.

6. The method of claim 1 wherein the determination of which buffer (s₁; s₂) is fuller is made based upon the amount of time associated with the portion of the media presentation stored in each buffer.

7. The method of claim 1 wherein said second media presentation comprises information related to the first media presentation.

8. A first media device (120, 130) for presentation of a first media presentation in coordination with a second media presentation on a second device (130, 120) comprising:
a processor configured to:
adjust playback of said first media presentation on said first device by said processor comprising the steps of:
comparing the playback position (v₁) of the first media presentation at the first device with the playback position (v₂) of the second media presentation at the second device; and
responsive to a determination that the playback position (v₁) of the first device is behind the playback position (v₂) of the second device, advancing playback of the first media presentation based upon the time difference between the playback position of the first media presentation at the first device and the playback position of the second media presentation at the second device, or,
responsive to a determination that the playback position (v₁) of the first device is ahead of the playback position (v₂) of the second device, pausing playback for a time selected based upon the difference between the playback position of the first media presentation at the first device and the playback position of the second media presentation at the second device,
a network interface configured to:
send an indication of the playback position (v₁) and buffer status (s₁) of the first media presentation at the first device to the second device; and receive at the first device an indication of the playback position (v₂) and buffer status (s₂) of the second media presentation from the second device, and
said processor configured to:
compare the time (t₁-t₀) elapsed during presentation of a portion of the first media presentation with an amount of time (v₁-v₀) associated with the portion of the first media presentation; and
responsive to a determination that the difference (δ₁) between the time (t₁-t₀) elapsed during presentation of the portion of the first media presentation and the amount of time (v₁-v₀) associated with the portion of the first media presentation exceeds a threshold, perform the steps of:
comparing the buffer status (s₁) of the first media presentation at the first device with a buffer status (s₂) of the second media presentation at the second device; and
responsive to a determination that the buffer (s₁) for the first media presentation on the first device is fuller than the buffer (s₂) for the second media presentation on the second device, adjusting playback of the first media presentation on the first device.

9. The first media device of claim 8 wherein advancing playback of the data stream comprises skipping presentation of video frames.

10. The first media device of claim 8 wherein said pausing comprises multiple pauses of a duration less than the time difference between the playback position (v₁) of the first media presentation at the first device and the playback position (v₂) of the second media presentation at the second device.

11. The first media device of claim 8 wherein the first media device (120, 130) is one of a television (120) or a handheld computing (130) device.

## Patentansprüche

1. Verfahren zum Koordinieren der Darstellung einer ersten Mediendarstellung bei einer ersten Vorrichtung (120, 130) und einer zweiten Mediendarstellung bei einer zweiten Vorrichtung (130, 120), wobei das Verfahren die folgenden Schritte umfasst:
Einstellen der Wiedergabe der ersten Mediendarstellung auf der ersten Vorrichtung, wobei das Einstellen der Wiedergabe die folgenden Schritte umfasst:
Vergleichen der Wiedergabestelle (v₁) der ersten Mediendarstellung bei der ersten Vorrichtung mit der Wiedergabestelle (v₂) der zweiten Mediendarstellung bei der zweiten Vorrichtung; und
Vorrücken der Wiedergabe der ersten Mediendarstellung auf der Grundlage der Zeitdifferenz zwischen der Wiedergabestelle der ersten Mediendarstellung bei der ersten Vorrichtung und der Wiedergabestelle der zweiten Mediendarstellung bei der zweiten Vorrichtung in Ansprechen auf eine Bestimmung, dass die Wiedergabestelle (v₁) der ersten Vorrichtung hinter der Wiedergabestelle (v₂) der zweiten Vorrichtung liegt, oder
Pausieren der Wiedergabe für eine auf der Grundlage der Differenz zwischen der Wiedergabestelle der ersten Mediendarstellung bei der ersten Vorrichtung und der Wiedergabestelle der zweiten Mediendarstellung bei der zweiten Vorrichtung gewählte Zeit in Ansprechen auf eine Bestimmung, dass die Wiedergabestelle (v₁) der ersten Vorrichtung vor der Wiedergabestelle (v₂) der zweiten Vorrichtung liegt,
Senden einer Angabe der Wiedergabestelle (v₁) und des Pufferstatus (s₁) der ersten Mediendarstellung bei der ersten Vorrichtung an die zweite Vorrichtung;
Empfangen einer Angabe der Wiedergabestelle (v₂) und des Pufferstatus (s₂) der zweiten Mediendarstellung von der zweiten Vorrichtung bei der ersten Vorrichtung;
Vergleichen der Zeit (t₁ - t₀), die während der Darstellung eines Abschnitts der ersten Mediendarstellung verstrichen ist, mit einer Zeitdauer (v₁ - v₀), die dem Abschnitt der ersten Mediendarstellung zugeordnet ist;
in Ansprechen auf eine Bestimmung, dass die Differenz (δ₁) zwischen der Zeit (t₁ - t₂), die während der Darstellung des Abschnitts der ersten Mediendarstellung verstrichen ist, und der Zeitdauer (v₁ - v₀), die dem Abschnitt der ersten Mediendarstellung zugeordnet ist, einen Schwellenwert übersteigt, Ausführen der folgenden Schritte:
Vergleichen des Pufferstatus (s1) der ersten Mediendarstellung bei der ersten Vorrichtung mit einem Pufferstatus (s₂) der zweiten Mediendarstellung bei der zweiten Vorrichtung; und
Einstellen der Wiedergabe der ersten Mediendarstellung auf der ersten Vorrichtung in Ansprechen auf eine Bestimmung, dass der Puffer (s₁) für die erste Mediendarstellung auf der ersten Vorrichtung voller als der Puffer (s₂) für die zweite Mediendarstellung auf der zweiten Vorrichtung ist.

2. Verfahren nach Anspruch 1, wobei das Senden in Ansprechen auf die Bestimmung ausgeführt wird, dass die Differenz zwischen der verstrichenen Zeit (t₁ - t₀) und der Zeit (v₁ - v₀), die dem dargestellten Abschnitt der ersten Mediendarstellung zugeordnet ist, einen Schwellenwert übersteigt.

3. Verfahren nach Anspruch 1, wobei das Vorrücken der Wiedergabe des Datenstroms das Überspringen der Darstellung von Videoeinzelbildern umfasst.

4. Verfahren nach Anspruch 1, wobei das Pausieren mehrere Pausen mit einer kleineren Dauer als der Zeitdifferenz zwischen der Wiedergabestelle (v₁) der ersten Mediendarstellung bei der ersten Vorrichtung und der Wiedergabestelle (v₂) der zweiten Mediendarstellung bei der zweiten Vorrichtung umfasst.

5. Verfahren nach Anspruch 1, wobei die Zeitdauer, die dem Abschnitt (v₁) der ersten Mediendarstellung zugeordnet ist, auf der Grundlage von Zeitdaten bestimmt wird, die dem Anfang und dem Ende des Abschnitts der ersten Darstellung zugeordnet sind.

6. Verfahren nach Anspruch 1, wobei die Bestimmung, welcher Puffer (s₁; s₂) voller ist, auf der Grundlage der Zeitdauer erfolgt, die dem in jedem Puffer gespeicherten Abschnitt der Mediendarstellung zugeordnet ist.

7. Verfahren nach Anspruch 1, wobei die zweite Mediendarstellung Informationen umfasst, die sich auf die erste Mediendarstellung beziehen.

8. Erste Medienvorrichtung (120, 130) für die Darstellung einer ersten Mediendarstellung koordiniert mit einer zweiten Mediendarstellung auf einer zweiten Vorrichtung (130, 120), wobei die erste Medienvorrichtung umfasst:
einen Prozessor, der konfiguriert ist zum:
Einstellen der Wiedergabe der ersten Mediendarstellung auf der ersten Vorrichtung durch den Prozessor, das die folgenden Schritte umfasst:
Vergleichen der Wiedergabestelle (v₁) der ersten Mediendarstellung bei der ersten Vorrichtung mit der Wiedergabestelle (v₂) der zweiten Mediendarstellung bei der zweiten Vorrichtung; und
Vorrücken der Wiedergabe der ersten Mediendarstellung auf der Grundlage der Zeitdifferenz zwischen der Wiedergabestelle der ersten Mediendarstellung bei der ersten Vorrichtung und der Wiedergabestelle der zweiten Mediendarstellung bei der zweiten Vorrichtung in Ansprechen auf eine Bestimmung, dass die Wiedergabestelle (v₁) der ersten Vorrichtung hinter der Wiedergabestelle (v₂) der zweiten Vorrichtung liegt, oder
Pausieren der Wiedergabe für eine auf der Grundlage der Differenz zwischen der Wiedergabestelle der ersten Mediendarstellung bei der ersten Vorrichtung und der Wiedergabestelle der zweiten Mediendarstellung bei der zweiten Vorrichtung gewählte Zeit in Ansprechen auf eine Bestimmung, dass die Wiedergabestelle (v₁) der ersten Vorrichtung vor der Wiedergabestelle (v₂) der zweiten Vorrichtung liegt,
eine Netzschnittstelle, die konfiguriert ist zum:
Senden einer Angabe der Wiedergabestelle (v₁) und des Pufferstatus (s₁) der ersten Mediendarstellung bei der ersten Vorrichtung an die zweite Vorrichtung; und
Empfangen einer Angabe der Wiedergabestelle (v₂) und des Pufferstatus (s₂) der zweiten Mediendarstellung von der zweiten Vorrichtung bei der
ersten Vorrichtung; und
wobei der Prozessor konfiguriert ist zum:
Vergleichen der Zeit (t₁ - t₀), die während der Darstellung eines Abschnitts der ersten Mediendarstellung verstrichen ist, mit einer Zeitdauer (v₁ - v₀), die dem Abschnitt der ersten Mediendarstellung zugeordnet ist; und
in Ansprechen auf eine Bestimmung, dass die Differenz (δ₁) zwischen der Zeit (t₁ - t₂), die während der Darstellung des Abschnitts der ersten Mediendarstellung verstrichen ist, und der Zeitdauer (v₁ - v₀), die dem Abschnitt der ersten Mediendarstellung zugeordnet ist, einen Schwellenwert übersteigt, Ausführen der folgenden Schritte:
Vergleichen des Pufferstatus (s1) der ersten Mediendarstellung bei der ersten Vorrichtung mit einem Pufferstatus (s₂) der zweiten Mediendarstellung bei der zweiten Vorrichtung;
und
Einstellen der Wiedergabe der ersten Mediendarstellung auf der ersten Vorrichtung in Ansprechen auf eine Bestimmung, dass der Puffer (s₁) für die erste Mediendarstellung auf der ersten Vorrichtung voller als der Puffer (s₂) für die zweite Mediendarstellung auf der zweiten Vorrichtung ist.

9. Erste Medienvorrichtung nach Anspruch 8, wobei das Vorrücken der Wiedergabe des Datenstroms das Überspringen der Darstellung von Videoeinzelbildern umfasst.

10. Erste Medienvorrichtung nach Anspruch 8, wobei das Pausieren mehrere Pausen mit einer kleineren Dauer als der Zeitdifferenz zwischen der Wiedergabestelle (v₁) der ersten Mediendarstellung bei der ersten Vorrichtung und der Wiedergabestelle (v₂) der zweiten Mediendarstellung bei der zweiten Vorrichtung umfasst.

11. Erste Medienvorrichtung nach Anspruch 8, wobei die erste Medienvorrichtung (120, 130) ein Fernsehgerät (120) oder eine Handcomputervorrichtung (130) ist.

## Revendications

1. Procédé de coordination de la présentation d'une première présentation multimédia au niveau d'un premier dispositif (120,130) et d'une deuxième présentation multimédia au niveau d'un deuxième dispositif (130, 120) comprenant les étapes suivantes :
réglage de la lecture de ladite première présentation multimédia sur ledit premier dispositif dans lequel le réglage de la lecture comprend les étapes suivantes :
comparaison de la position de lecture (v₁) de la première présentation multimédia au niveau du premier dispositif avec la position de lecture (v₂) de la deuxième présentation multimédia au niveau du deuxième dispositif ; et
en réponse à une détermination selon laquelle la position de lecture (v₁) du premier dispositif est en retard par rapport à la position de lecture (v₂) du deuxième dispositif, avance de la lecture de la première présentation multimédia en fonction de la différence de temps entre la position de lecture de la première présentation multimédia au niveau du premier dispositif et la position de lecture de la deuxième présentation multimédia au niveau du deuxième dispositif, ou,
en réponse à une détermination selon laquelle la position de lecture (v₁) du premier dispositif est en avance par rapport à la position de lecture (v₂) du deuxième dispositif, mise en pause de la lecture pendant une durée sélectionnée en fonction de la différence entre la position de lecture de la première présentation multimédia au niveau du premier dispositif et la position de lecture de la deuxième présentation multimédia au niveau du deuxième dispositif,
envoi d'une indication de la position de lecture (v₁) et de l'état de la mémoire tampon (s1) de la première présentation multimédia au niveau du premier dispositif au deuxième dispositif ;
réception au niveau du premier dispositif d'une indication de la position de lecture (v₂) et de l'état de la mémoire tampon (s₂) de la deuxième présentation multimédia du deuxième dispositif ;
comparaison du temps (t₁-t₀) écoulé pendant la présentation d'une partie de la première présentation multimédia avec une durée (v₁-v₀) associée à la partie de la première présentation multimédia ;
en réponse à une détermination selon laquelle la différence (δ₁) entre le temps (t₁-t₀) écoulé pendant la présentation de la partie de la première présentation multimédia et la durée (v₁-v₀) associée à la partie de la première présentation multimédia dépasse un seuil, exécution des étapes suivantes :
comparaison de l'état de la mémoire tampon (s₁) de la première présentation multimédia au niveau du premier dispositif avec un état de mémoire tampon (s₂) de la deuxième présentation multimédia au niveau du deuxième dispositif ; et
en réponse à une détermination selon laquelle la mémoire tampon (s₁) pour la première présentation multimédia sur le premier dispositif est plus remplie que la mémoire tampon (s₂) pour la deuxième présentation multimédia sur le deuxième dispositif, réglage de la lecture de la première présentation multimédia sur le premier dispositif.

2. Procédé selon la revendication 1, dans lequel l'envoi est effectué en réponse à la détermination selon laquelle la différence entre le temps écoulé (t₁-t₀) et la durée (v₁-v₀) associée à la partie présentée de la première présentation multimédia dépasse un seuil.

3. Procédé selon la revendication 1, dans lequel l'avance de la lecture du flux de données comprend l'omission de la présentation de trames vidéo.

4. Procédé selon la revendication 1, dans lequel ladite mise en pause comprend plusieurs pauses d'une durée inférieure à la différence de temps entre la position de lecture (v₁) de la première présentation multimédia au niveau du premier dispositif et la position de lecture (v₂) de la deuxième présentation multimédia au niveau du deuxième dispositif.

5. Procédé selon la revendication 1, dans lequel la durée associée à la partie (v₁) de la première présentation multimédia est déterminée en fonction des données de temps associées au début et à la fin de la partie de la première présentation.

6. Procédé selon la revendication 1, dans lequel la détermination selon laquelle la mémoire tampon (s₁ ; s₂) est plus remplie est basée sur la durée associée à la partie de la présentation multimédia stockée dans chaque mémoire tampon.

7. Procédé selon la revendication 1, dans lequel ladite deuxième présentation multimédia comprend des informations relatives à la première présentation multimédia.

8. Un premier dispositif multimédia (120,130) pour la présentation d'une première présentation multimédia en coordination avec une deuxième présentation multimédia sur un deuxième dispositif (130,120) comprenant :
un processeur configuré pour :
régler la lecture de ladite première présentation multimédia sur ledit premier dispositif par ledit processeur comprenant les étapes suivantes :
comparaison de la position de lecture (v₁) de la première présentation multimédia au niveau du premier dispositif avec la position de lecture (v₂) de la deuxième présentation multimédia au niveau du deuxième dispositif ; et
en réponse à une détermination selon laquelle la position de lecture (v₁) du premier dispositif est en retard par rapport à la position de lecture (v₂) du deuxième dispositif, avance de la lecture de la première présentation multimédia en fonction de la différence de temps entre la position de lecture de la première présentation multimédia au niveau du premier dispositif et la position de lecture de la deuxième présentation multimédia au niveau du deuxième dispositif, ou,
en réponse à une détermination selon laquelle la position de lecture (v₁) du premier dispositif est en avance par rapport à la position de lecture (v₂) du deuxième dispositif, mise en pause de la lecture pendant une durée sélectionnée en fonction de la différence entre la position de lecture de la première présentation multimédia au niveau du premier dispositif et la position de lecture de la deuxième présentation multimédia au niveau du deuxième dispositif, une interface configurée pour:
envoyer une indication de la position de lecture (v₁) et de l'état de la mémoire tampon (s₁)
de la première présentation multimédia au niveau du premier dispositif au deuxième dispositif ; et recevoir au niveau du premier dispositif une indication de la position de lecture (v₂) et de l'état de la mémoire tampon
(s₂) de la deuxième présentation du multimédia du deuxième dispositif, et ledit processeur configuré pour :
comparer le temps (t₁-t₀) écoulé pendant la présentation d'une partie de ladite première présentation multimédia avec une durée (v₁-v₀) associée à la partie associée à la partie de la première présentation multimédia ; et en réponse à une détermination selon laquelle la différence (δ₁) entre le temps (t₁-t₀) écoulé pendant la présentation de la partie de la première présentation multimédia et la durée (v₁-v₀) associée à la partie de la première présentation multimédia dépasse un seuil, effectuer les étapes suivantes :
comparaison de l'état de la mémoire tampon (s₁) de la première présentation multimédia au niveau du premier dispositif avec un état de mémoire tampon (s₂) de la deuxième présentation multimédia au niveau du deuxième dispositif ; et
en réponse à une détermination selon laquelle la mémoire tampon (s₁) pour la première présentation multimédia sur le premier dispositif est plus remplie que la mémoire tampon (s₂) pour la deuxième présentation multimédia sur le deuxième dispositif, réglage de la lecture de la première présentation multimédia sur le premier dispositif.

9. Premier dispositif multimédia selon la revendication 8, dans lequel l'avance de la lecture du flux de données comprend l'omission de la présentation de trames vidéo.

10. Premier dispositif multimédia selon la revendication 8, dans lequel ladite mise en pause comprend plusieurs pauses d'une durée inférieure à la différence de temps entre la position de lecture (v₁) de la première présentation multimédia au niveau du premier dispositif et la position de lecture (v₂) de la deuxième présentation multimédia au niveau du deuxième dispositif.

11. Premier dispositif multimédia selon la revendication 8, dans lequel le premier dispositif multimédia (120,130) est un téléviseur (120) ou un dispositif informatique portable (130).
